# EUROPÄISCHE PATENTANMELDUNG

(11) **EP 2 712 700 A1**
(43) Veröffentlichungstag der Anmeldung: **02.04.2014**
(21) Anmeldenummer: 13006050.2
(22) Anmeldetag: 04.05.2010
(51) Int. Cl.: B23K 26/38

(54) **Laserbohren ohne Gratbildung**

(62) Teilanmeldung aus: 10004709.1
(71) Anmelder: Siemens Aktiengesellschaft, 80333 München (DE)
(72) Erfinder: Massa, Andrea, 12157 Berlin (DE); Oppert, Andreas, 14612 Falkensee (DE)

(57) **Zusammenfassung**

Bei der Erzeugung eines Lochs durch ein Perkussionsverfahren kommt es oft zur Gratbildung.

Durch die Anwendung des Perkussionsverfahrens in einem ersten Schritt und eines Trepanierverfahrens im zweiten Schritt, wobei der Durchmesser des herzustellenden Lochs (10) schrittweise vergrößert wird, wird die Gratbildung vermieden.

## Beschreibung

Die Erfindung betrifft das Laserbohren von Bauteilen.

Stand der Technik ist es, einen Laser zur Erzeugung von Löchern zu verwenden.
Bei der Verwendung eines Lasers gibt es das Perkussieren und das Trepanieren.
Insbesondere bei der Erzeugung von Löchern in metallischen Substraten kommt es durch die Verdampfung von dem Substratmaterial zu einer Gratbildung am Bohrungsaustritt, auch wenn die Oberfläche mit einem Oberflächenschutz versehen ist.

Diese Grater müssen durch zusätzlichen Aufwand bspw. mittels Schleifen entfernt werden. Dies ist zeitaufwändig und kann zu Beschädigung einer eventuell vorhandenen Beschichtung führen.

Es ist daher Aufgabe der Erfindung oben genanntes Problem zu lösen.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen. Es zeigen:
- Figur 1, 2, 3, 4: Schritte des erfindungsgemäßen Verfahrens,
- Figur 5: eine Turbinenschaufel,

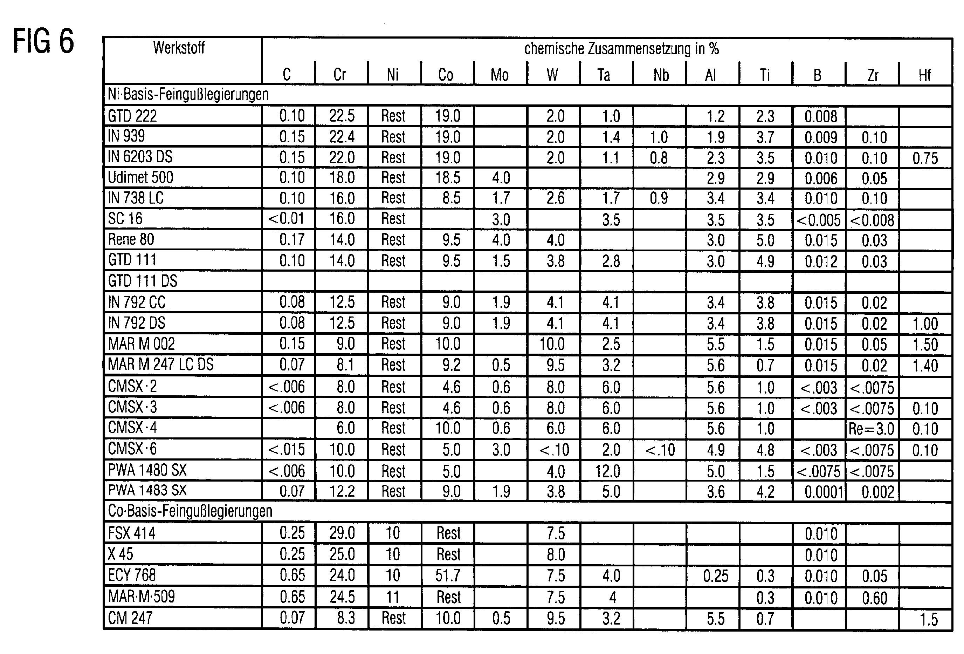

- Figur 6: eine Liste von Superlegierungen,
- Figur 7, 8: verschiedene Laserverfahren.

Die Figuren und die Beschreibung stellen nur Ausführungsbeispiele der Erfindung dar.

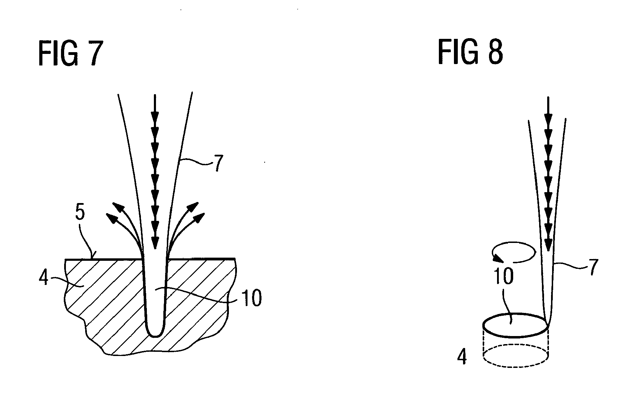

Figur 7 zeigt ein Substrat 4 eines Bauteils, das mittels eines Laserstrahls 7 bearbeitet wird.
Dabei liegt der Fokus vorzugsweise unterhalb der Oberfläche 5 des Substrats 4 und das Material des Substrats oder des Bauteils wird verdampft, wie es durch die Pfeile angedeutet ist. Der Laserstrahl bewegt sich dabei nicht innerhalb einer Ebene (Perkussionsverfahren), ggf. senkrecht zur Oberfläche 8.

In einem anderen Laserverfahren, dem Trepanieren (Fig. 8), wird der Laserstrahl 7 entlang einer gewünschten Form des herzustellenden Lochs 10 geführt.

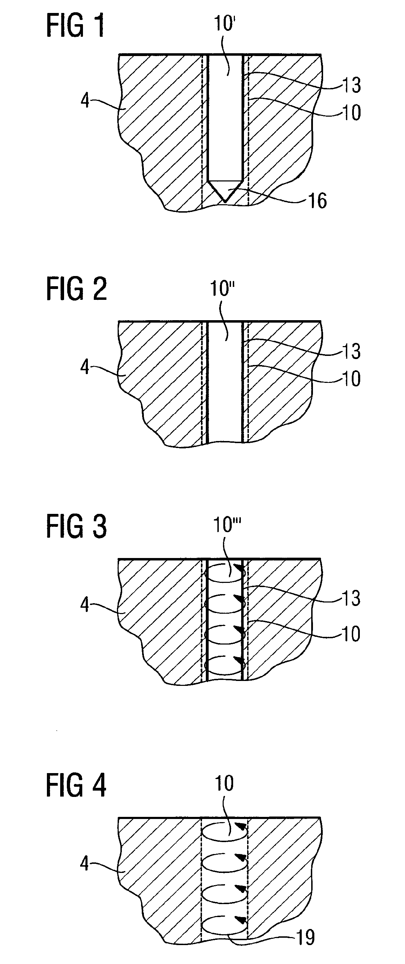

Figur 1 zeigt einen ersten Schritt des erfindungsgemäßen Verfahrens.

Mittels des Perkussionsverfahrens wird ein Zwischenloch 10', vorzugsweise ein Sackloch, bis zu einer bestimmten Tiefe, vorzugsweise mindestens 40%, ganz vorzugsweise mindestens 60%, vorzugsweise 90% bzw. 95% der endgültigen Bohrungstiefe eines Lochs 10 erzeugt.

Dabei ist der Querschnitt oder der Durchmesser des Zwischenlochs 10' kleiner als der Enddurchmesser des herzustellenden Lochs 10. Der Durchmesser des Zwischenlochs 10' ist vorzugsweise um mindestens 10% kleiner als der Enddurchmesser. Vorzugsweise liegt er bei 40% bis 60% des Enddurchmessers. Die Energie zur Herstellung des Zwischenlochs 10' ist gering zu wählen und es ist vorzugsweise eine Defokussierung des Laserstrahls in das Material einzustellen.

Bei der Herstellung des Sacklochs verbleibt also ein Rest 16 am Ende des Sacklochs 10'.

In einem weiteren Schritt wird der Lochdurchbruch durch ein Perkussionsverfahren und vorzugsweise mit höherer Energie (mindestens 20% höher) im Bestfokus durchgeführt (Figur 2), vorzugsweise ohne dass der Querschnitt oder Durchmesser des Lochs 10' verändert wird. Es entsteht ein Übergangs-Durchgangsloch 10".

Optional kann in einem dritten Schritt das Übergangs-Durchgangsloch 10" durch ein Trepanierverfahren vorpoliert werden und es entsteht das polierte Loch 10"' (Fig. 3).

Der Radius des Sacklochs 10' oder des Übergangs-Durchgangsloch 10" beträgt vorzugsweise 50% des endgültigen Radius oder Querschnitts des herzustellenden Lochs 10.

In einem letzten Schritt wird das Loch 10 aus dem Übergangs-Durchgangsloch 10" oder dem vorpolierten Loch 10"' endgültig durch ein Trepanierverfahren hergestellt und der gewünschte Enddurchmesser 19 wird eingestellt (Figur 4).

Durch die Vorperkussierung und durch einen anschließenden Trepanierprozess wird die Gratbildung minimiert bzw. vermieden.

Es können ein oder mehrere Laser verwendet werden, insbesondere für die unterschiedlichen Laserverfahren (Trepanier, Perkussion).

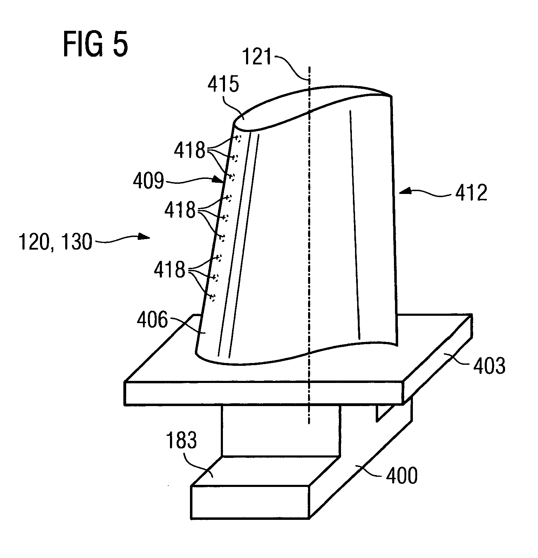

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z.B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zur Herstellung eines Lochs (10) mittels zumindest eines Lasers,
bei dem in einem ersten Schritt zumindest ein Zwischenloch (10', 10", 10"') mit deutlich geringerem Durchmesser im Vergleich zum herzustellenden Loch (10) erzeugt wird,
bei dem das Zwischenloch (10') mit dem geringeren Durchmesser ein Durchgangsloch darstellt und
in einem letzten Schritt der Enddurchmesser des herzustellenden Lochs (10) erzeugt wird

2. Verfahren nach Anspruch 1,
bei dem das Übergangs-Durchgangsloch (10") durch ein Trepanierverfahren vorpoliert wird.

3. Verfahren nach Anspruch 1,
bei dem ein Perkussionsverfahren verwendet wird.

4. Verfahren nach Anspruch 1 oder 2,
bei dem durch ein Trepanierverfahren das Übergangs-Durchgangsloch (10") bearbeitet wird und der endgültige Durchmesser des Lochs (10) erreicht wird.

5. Verfahren nach Anspruch 1, 2 oder 4,
bei dem ein Durchgangsloch (10) hergestellt wird.

6. Verfahren nach Anspruch 1, 2, 3, 4 oder 5,
bei dem der Durchmesser des Zwischenlochs (10') im ersten Schritt mindestens 10% kleiner ist als der Durchmesser des herzustellenden Loches,
insbesondere 40% bis 60% des Enddurchmessers beträgt.

## Geänderte Patentansprüche

### Geänderte Patentansprüche gemäss Regel 137(2) EPÜ.

**1.** Verfahren zur Herstellung eines Lochs (10) mittels zumindest eines Lasers,
bei dem in einem ersten Schritt zumindest ein Zwischenloch (10', 10", 10''') mit deutlich geringerem Durchmesser im Vergleich zum herzustellenden Loch (10) erzeugt wird, bei dem das Zwischenloch (10') mit dem geringeren Durchmesser ein Durchgangsloch darstellt und
bei dem ein Perkussionsverfahren verwendet wird,
in einem letzten Schritt der Enddurchmesser des herzustellenden Lochs (10) erzeugt wird,
bei dem durch ein Trepanierverfahren das Übergangs-Durchgangsloch (10") bearbeitet wird und der endgültige Durchmesser des Lochs (10) erreicht wird.

**2.** Verfahren nach Anspruch 1,
bei dem das Übergangs-Durchgangsloch (10") durch ein Trepanierverfahren vorpoliert wird.

**3.** Verfahren nach Anspruch 1 oder 2,
bei dem ein Durchgangsloch (10) hergestellt wird.

**4.** Verfahren nach Anspruch 1, 2 oder 3,
bei dem der Durchmesser des Zwischenlochs (10') im ersten Schritt mindestens 10% kleiner ist als der Durchmesser des herzustellenden Loches,
insbesondere 40% bis 60% des Enddurchmessers beträgt.
